# EUROPEAN PATENT APPLICATION

(11) **EP 2 887 301 A1**
(43) Date of publication of application: **24.06.2015**
(21) Application number: 13199436.0
(22) Date of filing: 23.12.2013
(51) Int. Cl.: G06Q 30/08

(54) **Transaction system of individual person securities**

(71) Applicant: Hsu, Wen-Chien, 813 Kaohsiung City (TW)
(72) Inventor: Hsu, Wen-Chien, 813 Kaohsiung City (TW)
(74) Representative: Tischner, Oliver

(57) **Abstract**

Disclosed is a transaction system of individual person securities that performs a securities transaction in related to an individual person, comprising: a data deriving module for deriving individual person data from an individual person data source; a data directing module for directing the individual person data from the data deriving module to obtain directed data; an evaluating module for processing a securities evaluation according to an evaluation criteria stored in the securities transaction system to obtain a securities evaluation result; and an individual person securities transaction platform for performing the securities transaction in related to an individual person based on the securities evaluation result.

## Description

### FIELD OF THE INVENTION

The present invention relates to a securities transaction system, and more particularly to a transaction system of individual person securities.

### BACKGROUND OF THE INVENTION

A security is a kind of tradable financial instruments, whose main advantages is for quickly raising a financial capital and for allocating the financial capital to thus activate the activities of financial, economic and investment, and therefore a securities transaction is widely operated in many countries. A country itself may also issue a government debt to raise money, and a domestic enterprise may issue securities to raise capital as well to absorb idle capital for improving the use efficiency of capital and achieving an optimal capital allocation.

However, there is still not any disclosure of securities of individual person in a conventional art. There is not any platform or scheme for operating a securities transaction of individual person for the individual person to efficiently raise money for himself/herself. The securities transaction of individual person may help a person who is believed to have his/her outstanding human quality to be further invested by the public, so that the person is benefited in such a way that he/she can make a plan of study, sophisticating his/her skilled talent and participating more international events by the support of the securities. Accordingly, the securities transaction of individual person can bring the benefit to the country thereof.

### SUMMARY OF THE INVENTION

In view of above, it is an obj ect of the present invention to provide a transaction system of individual person securities by which an efficient and convenient operation for performing a data processing operation thereof can be performed to make the operation of capital raising easier.

Therefore, the present invention overcomes the technical problems in the conventional art and provides a transaction system of individual person securities that performs a securities transaction in related to an individual person, comprising: a data deriving module for deriving an individual person data from an individual person data source; a data directing module for directing the individual person data from the data deriving module to obtain directed data; an evaluating module for processing a securities evaluation according to an evaluation criteria stored in the transaction system to obtain a securities evaluation result; and an individual person securities transaction platform for performing the securities transaction in related to an individual person based on the securities evaluation result.

According to an embodiment of the present invention, the individual person data source is provided by an educational institution, a social group, an academic institution, a professional organization or a foundation.

According to an embodiment of the present invention, the evaluation criteria have been certified by a reliable institution.

According to an embodiment of the present invention, the transaction system further comprises an individual person data classifying module for classifying the directed data.

According to an embodiment of the present invention, the individual person securities transaction platform performs the securities transaction in related to an individual person by means of a marketable securities transaction.

According to an embodiment of the present invention, the transaction system further comprises an investor rank determining module for providing an investor to determine a member rank for his/her registered account in the transaction system.

According to an embodiment of the present invention, the registered account having a relatively higher member rank is provided with a privilege of securities evaluation.

According to an embodiment of the present invention, the transaction system further comprises a securities value adjusting module for adjusting a value of the individual person securities based on an expectable value that will be created by the individual person of the securities thereof.

According to an embodiment of the present invention, the transaction system further comprises an individual person profile displaying module for displaying the individual person's profile and the individual person securities' data for the securities transaction that is performed on the individual person securities transaction platform.

According to an embodiment of the present invention, the transaction system further comprises an individual person securities suspending module for sending a suspend signal to the individual person securities transaction platform to thus suspend the securities transaction of the corresponding individual person securities.

By means of technical means of the present invention, an individual person can efficiently and conveniently perform a data processing operation of securities of individual person by means of the transaction system of the present invention thereby the securities of individual person can be traded in public so that an individual person is benefited of raising the capital for an advanced study, a research or an international contest to glory his/her country and society without the necessity of financial concern. On the other hand, an inventor can have a chance to make the investment by means of conveniently performing a securities transaction on the transaction system of the present invention. Accordingly, the present invention can create a win-win situation for an individual person and an investor.

### BRIEF DESCRIPTION OF THE DRAWINGS

The structure and the technical means adopted by the present invention to achieve the above and other objects can be best understood by referring to the following detailed description of the preferred embodiments and the accompanying drawings.
Fig. 1 is a block diagram of a transaction system of individual person securities according to an embodiment of the present invention; and
Fig. 2 is a schematic diagram illustrating profile of the individual person and the data of the individual person securities displayed on the transaction system according to an embodiment of the present invention.

### DETAILED DESCRIPTION OF THE PREFERRED EMBODIMENTS

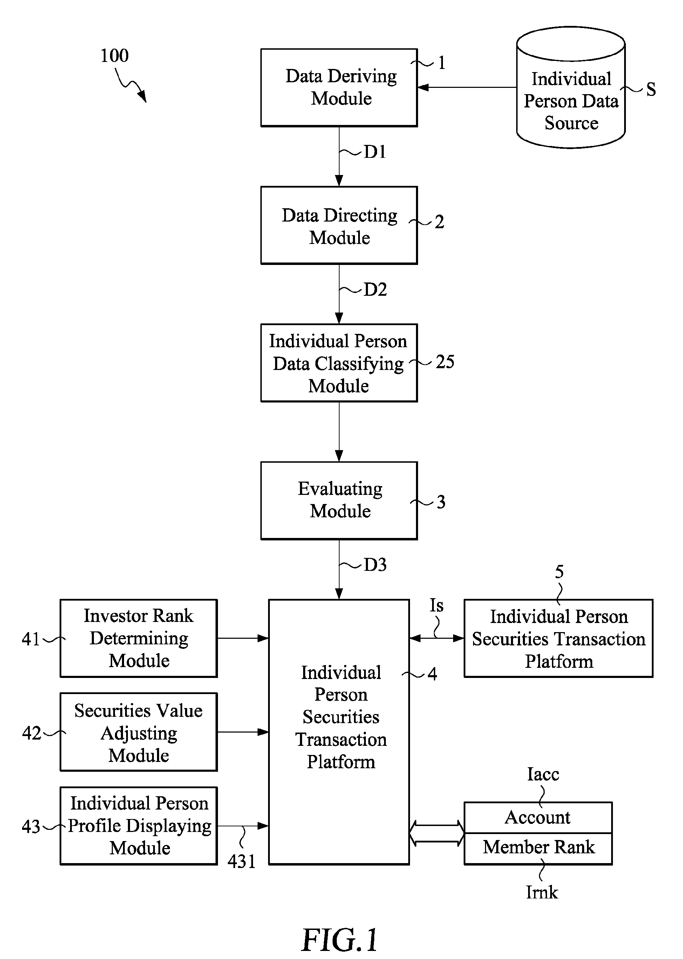

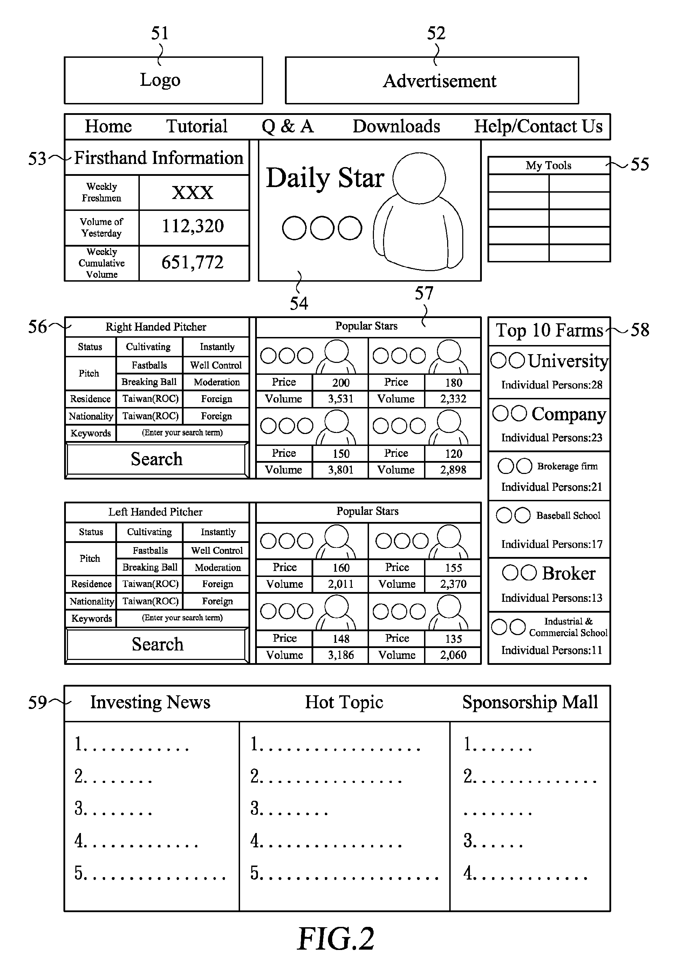

Embodiments are described in detail as below in reference to the Figs. 1 and 2, and the description is used for explaining the embodiments of the present invention only but not for limiting the scope of the claims.

As shown in Fig. 1, a transaction system 100 of individual person securities according to one embodiment of the present invention performs a securities transaction in related to an individual person. The transaction system 100 comprises a data deriving module 1 for deriving individual person data D1 from an individual person data source S; a data directing module 2 for directing the individual person data D1 from the data deriving module 1 to obtain directed data D2; an evaluating module 3 for processing a securities evaluation according to an evaluation criteria stored in the transaction system 100 to obtain a securities evaluation result D3; and an individual person securities transaction platform 4 for performing the securities transaction in related to an individual person based on the securities evaluation result D3.

In an embodiment of the present invention, the data deriving module 1 is connected to the individual person data source S. The individual person data source S is a partnership such as an educational institution, a social group, an academic institution, a professional organization, a foundation and so on, from which a profile and associated data of outstanding individual persons can be derived.

The data directing module 2 is connected with the data deriving module 1 to direct the individual person data D1 to thus obtain directed data D2. In the embodiment, the transaction system 100 further comprises an individual person data classifying module connected with the data directing module 2 for classifying the directed data D1. In detail, the classifying may be performed according to a background, a vocation, an income, an age, a personal characteristic, a current state of an individual person of an individual person.

The step of evaluating securities that is processed by the evaluating module 3 according to the evaluation criteria stored in the transaction system 100 is for measuring a profitability of the securities by considering a developing potential of the individual person. As taking an individual person of a pitcher as an example, the evaluation criteria may follow an evaluation criteria of a reliable institution, such as a special criteria for selecting a professional player or a national team's player. As shown in Table 1 below, the securities evaluation of an individual person may be performed by evaluating an individual person's personal attributes such as a height, a handedness, a pitching speed, types of pitches or the like, and an individual person's personal record such as a win-loss record, an earned run average (ERA), a strikeout record, a hit per nine innings, a walks plus hits per inning pitched (WHIP) or the like. Subsequently, a voting is performed by members of the transaction system 100 to determine whether the securities in related to the individual person is worthy of issuing or not, and the resulted securities evaluation result D3 is then sent to the individual person securities transaction platform 4.

**Table 1: Pitcher Evaluation Table**

| I. Basic Attributes | | | | II. Record | | |
|---|---|---|---|---|---|---|
| 1. stature (cm) | score | weight | | 1. win-loss record | score | |
| ∼175 | 0 | -- | | 0 | 0 | |
| 175∼179 | 1 | | | 1∼5 | 1 | |
| 180∼184 | 2 | | | 6∼10 | 2 | |
| 185∼189 | 3 | × 2 | | 11∼15 | 3 | |
| 190∼195 | 4 | | | 16∼20 | 4 | |
| 196∼ | 5 | | | 21 or more | 5 | |
| 2. handedness | score | | | 2. ERA | score | |
| left | 0 | | | 4.50∼ | 0 | |
| right | 1 | | | 4.49∼4.00 | 1 | |
| 3. the fastest pitching speed (km/h) | score | weight | | 3.99∼3.50 | 2 | |
| ∼130 | 0 | -- | | 3.49∼3.00 | 3 | |
| 130∼135 | 1 | | | 2.99∼2.50 | 4 | |
| 136∼144 | 2 | | | 2.49∼2.00 | 5 | |
| 145∼149 | 3 | × 2 | | 1.99∼1.50 | 6 | |
| 150∼151 | 4 | | | 1.49∼1.25 | 7 | |
| 152∼153 | 5 | | | 1.24∼1.01 | 8 | |
| 154∼155 | 6 | | | 1.00∼ | 9 | |
| 156∼157 | 7 | | | 3. strikeout record | score | weight |
| 158∼159 | 8 | | | ∼0.04 | 0 | -- |
| 160∼ | 9 | | | 0.04∼0.11 | 1 | |
| 4. the number of pitches | score | weight | | 0.12∼0.21 | 2 | |
| 1 | 0 | -- | | 0.22∼0.30 | 3 | × 2 |
| 2 | 1 | | | 0.31∼0.41 | 4 | |
| 3 | 2 | | | 0.42∼ | 5 | |
| 4 | 3 | × 2 | | 4. hit per nine innings | score | |
| 5 | 4 | | | ∼1.68 | 0 | |
| 6 or more | 5 | | | 1.67∼1.34 | 1 | |
| | | | | 1.33∼1.01 | 2 | |
| III. Bonus Points | | | | 1.00∼0.68 | 3 | |
| 1. MVP of the year | times×5 | | | 0.67∼0.44 | 4 | |
| 2. lowest ERA | times×4 | | | 0.44∼ | 5 | |
| 3. most strikeout record | times×3 | | | 5. WHIP | score | weight |
| 4. best win-loss record | times×2 | | | ∼3.01 | 0 | |
| 5. MVP of the month | times×1 | | | 3.00∼2.51 | 1 | |
| | | | | 2.50∼2.00 | 2 | |
| | | | | 1.99∼1.50 | 3 | |
| IV. Penalty Points | | | | 1.49∼1.25 | 4 | × 2 |
| 1. injury | times×2 | | | 1.24∼1.00 | 5 | |
| 2. negative news | times×1 | | | 0.99∼ | 6 | |

The securities evaluation result D3 is for classifying the individual person securities as several ranks with respect to the profitability of the securities. Generally, the securities evaluated as a relatively higher rank will be given a relatively larger capital value for fund raising. Further, a raising period and raising type for the individual person securities may be chosen by the individual person such as a raising period for every year or a raising type that is for raising funds in several years. In the case of raising funds once a year, the individual person can choose to restart a securities evaluation every year in order to obtain a better securities evaluation result in such a way to encourage an individual person.

Further, according to the securities evaluation result D3, the individual person securities transaction platform 4 can calculate an initial value of a circulation and an initial price thereof for starting the securities transaction in related to an individual person. In the embodiment, the individual person securities transaction platform 4 performs the securities transaction in related to an individual person by means of a marketable securities transaction. However, the securities transaction in related to an individual person also can be performed by means of auction or the like.

Specifically, the individual person securities transaction platform 4 is a platform specified for a securities transaction in related to an individual person. An investor can not only perform a securities transaction in related to an individual person on the individual person securities transaction platform 4 but also can perform other operations such as an operation of a payment, a booking, and denoting if there are provided with a convenience programs in the individual person securities transaction platform 4. The individual person securities transaction platform 4 has some functions similar to an electronic commerce platform, so that an investor can registered an account in the individual person securities transaction platform 4 to become a member to thus enable to perform a securities transaction in related to an individual person and obtain related services. Thus, an investor can invest in the individual person securities for a profit, and an individual person of securities thereof can efficiently raise capital for achieving his/her aspiration. In addition to a general investor, an individual person of securities thereof also can purchase his/her individual person securities by performing a securities transaction on the individual person securities transaction platform 4. When the securities in related to an individual person are all purchased by the individual person himself/herself, there is no need for him/her to prepare a his/her partial income as a profit of an investor.

As shown in Fig. 1, in an embodiment of the present invention, the transaction system 100 further comprises an investor rank determining module 41, a securities value adjusting module 42 and an individual person securities suspending module 43.

The investor rank determining module 41 is provided for an investor to determine a member rank Irnk for a registered account Iacc in the transaction system 100. For example, the member rank is usually classified as a general member and a VIP member with a relatively higher rank. A general member is a member who can perform a securities transaction after an account is registered. A VIP member is a member who can further have some exclusive privileges if he/she pays an annual fee. In other words, a registered account Iacc having a relatively higher member rank is provided with a relatively higher privilege such as a privilege of a securities evaluation. Specifically, the exclusive privilege may include: accessing a list and an introduction of an individual person participating in the transaction system 100, accessing a detailed data and an analysis report with respect to the securities evaluation of individual person securities, participating in a voting of the securities evaluation, and meeting an individual person whose securities are invested.

The securities value adjusting module 42 is provided for adjusting a value of an individual person securities based on an expectable value that will be created by an individual person of securities thereof. The expectable value is regarded as a tangible value and an intangible value which are expectable to be created by an individual person of securities thereof. For example, in the case that an individual person of securities thereof is an income earner, the securities value adjusting module 42 may adjust a value of the securities based on a regular income of the individual person, e.g., a monthly salary, and an irregular income of the individual person which is expectable. In the case that an individual person of securities thereof is not an income earner, the securities value adjusting module 42 may adjust a value of the securities based on an estimated current learning performance of the individual person. However, in addition to a factor of an individual person itself, the value of the securities is varied by market mechanism to result in a profit or a loss.

The individual person securities suspending module 43 is provided for sending a suspend signal 431 to the individual person securities transaction platform 4 to thus suspend the securities transaction of corresponding individual person securities.

As referring to Fig. 1 and Fig. 2, the transaction system 100 of individual person securities according to the embodiment of the present invention also comprises an individual person profile displaying module 5 for displaying an individual person's profile and individual person securities' data as well. Specifically, an information signal Is regarding the individual person's profile and the individual person securities' data are sent from the individual person securities transaction platform 4 to the individual person profile displaying module 5 which then displays the information signal Is in any form such as a web page, a paper, a media or the like.

As shown in Fig. 2, as taking a displaying form of a web page as an example, the profile and the data may be displayed in different regions 51, 52, 53, 54, 55, 56, 57, 58 and 59 in a web page by the individual person profile displaying module 5. In the embodiment, it takes a pitcher as an example of an individual person. The region 51 is for showing a logo of the web page, the region 51 is tapped/clicked to return to a homepage. The region 52 shows a displayed advertisement such as in form of a scrolling text marquee. The region 53 is for showing a firsthand information regarding the individual person securities such as a report of weekly freshmen, i.e., a weekly list of new individual persons participating in the individual person securities transaction platform 4, a transaction volume of yesterday, i.e., the number of shares of individual person securities traded yesterday, and a weekly cumulative volume, i.e., the cumulative number of shares of individual person securities traded over a week such as from Monday to Friday. The region 54 shows a column of interview of an individual person in form of wordings and/or supplemented by a video by which an individual person can introduce himself/herself and talk about his/her future plan. The region 55 shows a toolbox that provides an investor with tools for a securities transaction in related to an individual person. The region 56 shows a searching bar that is provided for an investor to search the information of a player, including a height, a pitch power, a residence, a nationality and so on of the individual person. The region 57 shows information of popular stars of the securities thereof such as top 10 pitchers with highest securities value. Since a prices and a volume of an individual person securities is varied every day, so the content of a list of popular players is changed. The region 58 shows the individual person data source in partnership with the transaction system 100, e.g., an educational institution, a brokerage firm, a baseball team, an academic institution and a training unit, which may be sorted according to the number of the individual person that these data source provides. The region 59 shows an investing news, a hot topic and a sponsorship mall. In the embodiment, the investing news and the hot topic are displayed are related to a pitcher, and the sponsorship mall is for selling a product in related to a pitcher too in which partial revenues from the product will be provided as a sponsor donation to a corresponding individual person.

By means of above technical means, an individual person can perform a data processing operation of securities of individual person by means of the transaction system of the present invention thereby the securities of individual person can be traded in public so that an individual person is benefited of raising the capital for an advanced study, a research or an international contest to glory his/her country and society without the necessity of financial concern. On the other hand, an inventor can have a chance to make the investment by means of conveniently performing a securities transaction on the transaction system of the present invention. Accordingly, the present invention can create a win-win situation for an individual person and an investor.

The above description should be considered as only the discussion of the preferred embodiments of the present invention. However, a person having ordinary skill in the art may make various modifications to the present invention. Moreover, such modifications still fall within the spirit and scope defined by the appended claims

## Claims

1. A transaction system of individual person securities that performs a securities transaction in related to an individual person, comprising:
a data deriving module for deriving individual person data from an individual person data source;
a data directing module for directing the individual person data from the data deriving module to obtain directed data;
an evaluating module for processing a securities evaluation according to an evaluation criteria stored in the transaction system to obtain a securities evaluation result; and
an individual person securities transaction platform for performing the securities transaction in related to an individual person based on the securities evaluation result.

2. The transaction system as claimed in claim 1, wherein the individual person data source is provided by an educational institution, a social group, an academic institution, a professional organization or a foundation.

3. The transaction system as claimed in claim 1, wherein the evaluation criteria has been certified by a reliable institution.

4. The transaction system as claimed in claim 1, further comprising an individual person data classifying module for classifying the directed data.

5. The transaction system as claimed in claim 1, wherein the individual person securities transaction platform performs the securities transaction in related to an individual person by means of a marketable securities transaction.

6. The transaction system as claimed in claim 1, further comprising an investor rank determining module for providing an investor to determine a member rank for his/her registered account in the transaction system.

7. The transaction system as claimed in claim 6, wherein the registered account having a relatively higher member rank is provided with a privilege of securities evaluation.

8. The transaction system as claimed in claim 1, further comprising a securities value adjusting module for adjusting a value of the individual person securities based on an expectable value that will be created by the individual person of the securities thereof.

9. The transaction system as claimed in claim 1, further comprising an individual person profile displaying module for displaying the individual person's profile and the individual person securities' data for the securities transaction that is performed on the individual person securities transaction platform.

10. The transaction system as claimed in claim 1, further comprising an individual person securities suspending module for sending a suspend signal to the individual person securities transaction platform to thus suspend the securities transaction of the corresponding individual person securities.
